# FASCICULE DE BREVET EUROPEEN

(11) **EP 2 953 442 B1**
(45) Date de publication et mention de la délivrance du brevet: **14.06.2017**
(21) Numéro de dépôt: 14727578.8
(22) Date de dépôt: 03.02.2014
(51) Int. Cl.: A01B 59/06, A01B 59/043

(54) **DISPOSITIF FORMANT ATTELAGE TROIS POINTS D'UNE MACHINE AGRICOLE PORTÉE À UN TRACTEUR OU AUTOMOTEUR AGRICOLE**
VORRICHTUNG ZUR FORMUNG EINER DREIPUNKTANHÄNGUNG ZUM ANHÄNGEN EINER MONTIERTEN LANDWIRTSCHAFTLICHEN MASCHINE AN EINEN LANDWIRTSCHAFTLICHEN TRAKTOR ODER EIN SELBSTFAHRENDES FAHRZEUG
DEVICE FORMING A THREE-POINT HITCH FOR HITCHING A MOUNTED AGRICULTURAL MACHINE TO AN AGRICULTURAL TRACTOR OR SELF-PROPELLED VEHICLE

(30) Priorité: 11.02.2013 FR 1351137
(43) Date de publication de la demande: 16.12.2015
(73) Titulaire: Institut National de Recherche en Sciences et Technologies pour l'Environnement et l'Agriculture (IRSTEA), 92160 Antony (FR)
(72) Inventeur: AL-BASSIT, Lama, F-92160 Antony (FR); TRICOT, Nicolas, F-91320 Wissous (FR)
(74) Mandataire: Kaspar, Jean-Georges
(86) Numéro de dépôt international: PCT/FR2014/050188
(87) Numéro de publication internationale: WO 2014/122386

(56) Documents cités:
- DE-A1- 4 127 530
- FR-A1- 2 184 755
- JP-U- S54 135 308
- US-A- 2 971 591

## Description

L'invention est relative à un dispositif formant attelage trois points d'une machine agricole portée à un tracteur ou automoteur agricole.

On connaît des dispositifs d'attelage trois points du type comportant deux bras de levage inférieurs et un troisième point d'attelage supérieur.

Ces dispositifs nécessitent pour l'attelage et le dételage de la machine agricole ou de l'outil, de reculer le tracteur ou l'automoteur agricole dans une position précise permettant le déplacement des bras inférieurs pour les mettre en correspondance avec des axes d'accrochage de l'outil ou de la machine agricole.

Les erreurs de positionnement nécessitent des efforts importants pour faire coïncider l'extrémité distale du bras d'attelage avec l'axe correspondant de l'outil ou de la machine agricole. Après positionnement, le verrouillage de l'outil ou de la machine agricole au tracteur ou automoteur agricole est assuré en plaçant des goupilles à travers des orifices correspondants des axes de la machine agricole.

La technique d'attelage ou de dételage d'un outil ou d'une machine agricole à un tracteur ou à un automoteur agricole présente plusieurs inconvénients. Lorsque le positionnement du tracteur ou de l'automoteur agricole est imparfait, les manoeuvres de positionnement doivent être répétées jusqu'à obtention du positionnement correct. Généralement, en cas de positionnement approximatif, le conducteur ou l'opérateur intervient sur le système d'attelage en forçant les bras d'attelage inférieurs dans la position d'accrochage de l'outil. Cet effort ou cette intervention sur le système d'attelage, par exemple par dévissage de deux chandelles, est contraignant et peu ergonomique. Dans le cas d'une instabilité de l'outil ou de la machine agricole, des risques d'accident par écrasement ou par coincement se présentent.

Le document de brevet japonais JP S54 135308 U divulgue un dispositif d'attelage d'un outil de type charrue à un engin agricole tracteur qui permet de positionner la charrue à la bonne hauteur de travail par rapport au sol. Cependant ne donne aucune information concernant un moyen automatique permettant de résoudre le problème particulier exposé précédemment.

Un premier but de l'invention est d'améliorer l'attelage et le dételage d'un outil ou d'une machine agricole à un tracteur ou à un automoteur agricole.

Un deuxième but de l'invention est de proposer un nouveau dispositif formant attelage trois points, de conception simple et ergonomique, évitant les risques d'accident de personnel ou d'endommagement du matériel.

L'invention a pour objet un dispositif formant attelage trois points d'une machine agricole portée à un tracteur ou automoteur agricole, du type comportant deux bras de levage inférieurs et un troisième point d'attelage supérieur, selon la revendication 1.

Selon d'autres caractéristiques alternatives de l'invention :
- Chaque pièce mobile peut avantageusement présenter une conformation en « Y », comportant une chape articulée au bras de levage inférieur et un oeil de maintien au châssis du tracteur ou automoteur agricole.
- Chaque pièce mobile en « Y » comporte une conformation de maintien en position bloquée de travail.
- Ladite conformation de maintien en position bloquée est agencée pour coopérer avec un organe de verrouillage solidaire du châssis du tracteur ou automoteur agricole.
- La conformation de maintien en position bloquée comporte avantageusement un axe, et l'organe de verrouillage présente une conformation en crochet apte à coopérer avec cet axe.
- La conformation de maintien d'une pièce mobile en « Y » présente de préférence une extrémité de montage d'un actionneur latéral de positionnement d'un bras de levage inférieur.
- L'organe de verrouillage est de préférence un organe basculant commandé par un actionneur prenant appui sur le châssis du tracteur ou automoteur agricole.
- Le dispositif comporte deux bras supérieurs soumis à la poussée de vérins de levage correspondants.
- Un actionneur de positionnement formant chandelle est avantageusement monté entre chaque bras supérieur et chaque bras de levage inférieur.

L'invention sera mieux comprise grâce à la description qui va suivre donnée à titre d'exemple non limitatif en référence aux dessins annexés dans lesquels :
La figure 1 représente schématiquement un dispositif selon l'invention en position flottante facilitant l'attelage ou le dételage d'une machine agricole ou d'un outil à un tracteur ou automoteur agricole.
La figure 2 représente schématiquement un dispositif selon l'invention en position bloquée de travail pour solidariser un outil ou une machine agricole à un tracteur ou à un automoteur agricole lors du travail correspondant.

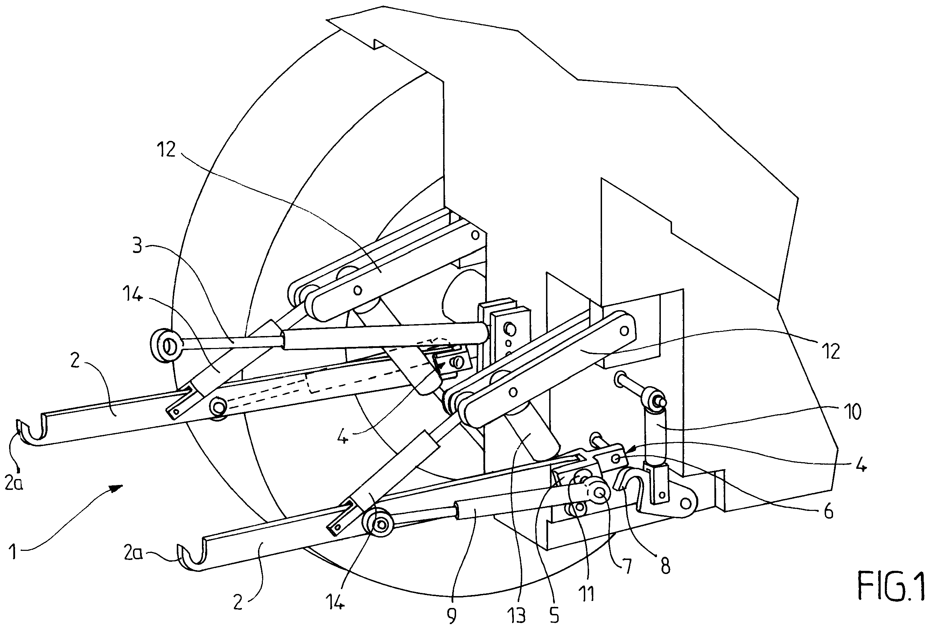

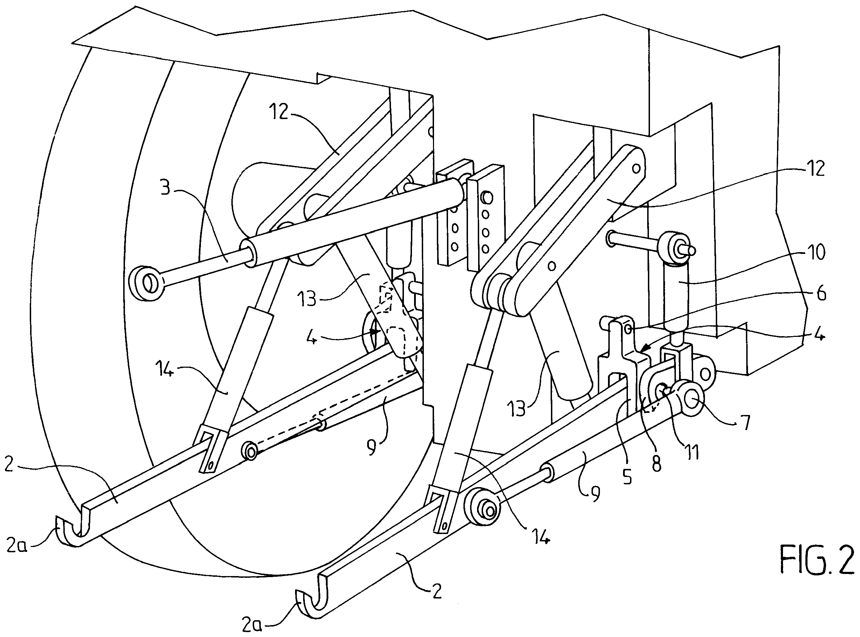

En référence aux figures 1 et 2, les éléments identiques ou fonctionnellement équivalents sont repérés par des chiffres de référence identiques.

Sur la figure 1, un dispositif d'attelage trois points selon l'invention est repéré dans son ensemble par (1).

Le dispositif comporte deux bras inférieurs (2) de levage et un troisième point (3) d'attelage supérieur, de manière connue en soi.

Chaque bras (2) de levage inférieur est articulé à une pièce mobile (4) liée au châssis du tracteur ou automoteur agricole. La pièce mobile (4) est montée basculante, de manière à permettre un déplacement de l'extrémité distale (2a) du bras de levage inférieur (2). Cette mobilité facilite le déplacement de l'extrémité distale (2a) et permet un attelage et un dételage ergonomique d'une machine agricole ou d'un outil non représenté.

Chaque pièce mobile (4) peut basculer entre une position verticale et une position horizontale correspondant au déplacement maximal de l'extrémité distale (2a).

Dans la position de la figure 1, la mobilité de la pièce (4) résulte du fait qu'elle est uniquement solidaire du châssis par un oeilleton (6) engagé sur un axe correspondant du châssis.

La pièce mobile (4) présente de préférence une conformation en « Y » avec une partie supérieure comportant l'oeilleton (6) et une partie inférieure (5) conformée en chape permettant le montage de l'extrémité proximale du bras de levage inférieur (2).

La chape de montage (5) est prolongée par une conformation (7) de maintien en position de travail.

Dans le cas de dispositifs de taille importante destinés à des engins de grande puissance, il est préférable d'assister le déplacement de l'extrémité distale (2a) du bras de levage à l'aide d'actionneurs, de préférence des vérins hydrauliques.

Ainsi, un actionneur latéral (9) formant stabilisateur permet le déplacement latéral de l'extrémité distale (2a) du bras de levage, tandis qu'un actionneur (14) formant chandelle permet le positionnement en hauteur de l'extrémité distale (2a) du bras de levage.

Les actionneurs (9 et 14) présentent une similitude avec les stabilisateurs et chandelles de l'art antérieur, réglés généralement mécaniquement par vissage.

L'invention couvre également une variante de réalisation non représentée dans laquelle le stabilisateur latéral permettant le déplacement latéral de l'extrémité distale (2a) du bras de levage est réglé manuellement par exemple par vissage.

L'invention couvre également une autre variante de réalisation non représentée dans laquelle le moyen formant chandelle permettant le positionnement en hauteur de l'extrémité distale (2a) du bras de levage est soit réglé manuellement par exemple par vissage, de manière similaire à une chandelle réglable de type connu, soit libre sur une plage de longueur délimitée par des butées.

Le dispositif comporte avantageusement des bras supérieurs (12) soumis à la poussée de vérins de levage (13) montés entre chaque bras supérieur (12) et un point fixe du châssis du tracteur ou de l'automoteur agricole.

Du fait de la position flottante de l'extrémité proximale de chaque bras (2) inférieur de levage, l'extrémité distale (2a) de chaque bras inférieur (2) de levage peut être déplacée à volonté sans produire de contrainte sur les axes d'attelage de la machine agricole ou de l'outil non représenté.

L'absence d'effort ou de contrainte au contact de l'outil ou de la machine agricole non représentée permet ainsi d'éviter les risques d'accident de personnel ou d'endommagement du matériel de l'art antérieur.

Après attelage de la machine ou de l'outil agricole, l'opérateur agit sur les vérins (9 et 14) pour placer la pièce mobile (6) dans une position désirée permettant son verrouillage grâce à la conformation (7) de maintien.

Après positionnement de la pièce mobile (4) dans la position de verrouillage, le verrouillage est effectué par un verrou (8) en forme de crochet commandé par un actionneur (10) prenant appui sur le châssis du tracteur ou de l'automoteur agricole.

Sur la figure 2, le dispositif (1) selon l'invention est représenté dans la position verrouillée correspondant à une position bloquée de travail.

Dans la position bloquée de travail, l'extrémité en crochet de l'organe (8) de verrouillage solidaire du châssis emprisonne une rotule (11) montée sur l'axe (7) de la conformation de maintien en position bloquée.

Du fait de l'engagement du crochet (8) sur la rotule (11) montée sur l'axe (7), la pièce mobile (6) est bloquée en position sensiblement verticale et ne peut se dégager, même en cas de coupure de l'alimentation hydraulique du vérin (10) de blocage.

L'orientation vers le bas du crochet (8) assure ainsi une sécurité supplémentaire en constituant un mécanisme autobloquant avec la rotule (11) montée sur l'axe (7) de la pièce mobile (6).

Dans le cas d'un attelage d'outil ou de machine agricole de grande dimension, l'opérateur peut tout d'abord accoster les extrémités distales (2a) aux rotules d'attelage de l'outil ou de la machine agricole en agissant manuellement sur les actionneurs (9 et 14) pour déplacer les extrémités distales (2a) des bras de levage (2) dans les positions désirées.

Après avoir verrouillé les extrémités distales (2a) avec l'outil ou machine agricole non représentée, par exemple par insertion de goupille, l'opérateur peut agir sur les vérins (9 et 14) pour déplacer ensuite les pièces mobiles (4) et les positionner de manière que les axes (7) de maintien soient placés en correspondance avec les crochets (8) de blocage.

Un avantage de l'invention est que la structure du dispositif formant attelage trois points selon l'invention est similaire au dispositif existant, tant du point de vue de la structure que du fonctionnement.

Un autre avantage de l'invention est que les dispositions des actionneurs libèrent l'accès central pour connecter les prises de puissance hydrauliques ou prises de force mécaniques de manière analogue au mode de connexion actuel.

Encore un autre avantage de l'invention est de ne pas imposer de changement dans la conception des tracteurs et automoteurs, de sorte que les avantages des dispositifs d'attelage trois points actuels sont conservés.

L'invention décrite en référence à un mode de réalisation particulier ne lui est nullement limitée, mais couvre au contraire toute modification de forme et toute variante de réalisation dans le cadre des revendications annexées.

## Revendications

1. Dispositif (1) formant attelage trois points d'une machine agricole portée à un agricole, du type comportant deux bras (2) de levage inférieurs et un troisième point (3) d'attelage supérieur, dans lequel chaque bras (2) de levage inférieur est articulé à une pièce intermédiaire liée au châssis du tracteur ou de l'automoteur, caractérisé en combinaison par le fait que :
- chaque pièce intermédiaire est une pièce mobile (4) montée basculante sur le châssis du tracteur ou de l'automoteur, de manière à permettre un déplacement latéral de l'extrémité distale (2a) du bras de levage inférieur (2) pour faciliter l'attelage et le dételage de la machine agricole le dispositif étant alors en position flottante;
- et que le dispositif comporte un moyen de blocage configuré et agencé sur le châssis du tracteur ou de l'automoteur pour bloquer le basculement libre de chaque pièce mobile (4) par rapport au châssis du tracteur ou de l'automoteur après attelage de la machine agricole, le blocage de la pièce mobile (4) entrainant le blocage du déplacement latéral de l'extrémité distale (2a) du bras de levage inférieur (2), le dispositif étant alors en position bloquée de travail;
- le dispositif comportant en outre des actionneurs (9, 14) pour déplacer latéralement
chacun des bras de levage inférieur (2), après attelage de la machine agricole, de façon à amener la pièce mobile avec laquelle il s'articule dans la position permettant son blocage.

2. Dispositif selon la revendication 1, **caractérisé par le fait que** chaque pièce mobile (4) présente une conformation en « Y » comportant une partie inférieure formant une chape (5) articulée au bras (2) de levage inférieur avec lequel la pièce s'articule et une partie supérieure comportant un oeilleton de maintien (6) engagé sur un axe solidaire du châssis du tracteur ou automoteur agricole.

3. Dispositif selon la revendication 2, **caractérisé par le fait que** chaque pièce mobile (4) en « Y » comporte une conformation (7) de maintien en position bloquée de travail.

4. Dispositif selon la revendication 3, **caractérisé par le fait que** ladite conformation (7) de maintien en position bloquée est agencée pour coopérer avec un organe (8) de verrouillage solidaire du châssis du tracteur ou automoteur agricole.

5. Dispositif selon la revendication 4, **caractérisé par le fait que** la conformation (7) de maintien en position bloquée comporte un axe sur lequel est montée une rotule (11) et **par le fait que** l'organe de verrouillage (8) présente une conformation en crochet, la conformation (7) de maintien et le crochet (8) étant agencés l'un par rapport à l'autre de telle façon que le crochet puisse venir emprisonner la rotule lorsque celle-ci est dans la position permettant son blocage.

6. Dispositif selon l'une quelconque des revendications 3 à 5, **caractérisé par le fait que** la conformation de maintien (7) d'une pièce mobile (4) en « Y » présente une extrémité de montage d'un actionneur (9) latéral de positionnement du bras (2) de levage inférieur avec lequel elle s'articule.

7. Dispositif selon la revendication 4 ou la revendication 5, **caractérisé par le fait que** l'organe (8) de verrouillage est un organe basculant commandé par un actionneur (10) prenant appui sur le châssis du tracteur ou de l'automoteur.

8. Dispositif selon l'une quelconque des revendications précédentes, **caractérisé par le fait que** le dispositif comporte deux bras supérieurs (12) associés à deux vérins (13) de levage correspondants.

9. Dispositif selon la revendication 8, **caractérisé par le fait qu'**un actionneur (14) de positionnement formant chandelle est monté entre chaque bras supérieur (12) et chaque bras de levage inférieur (2).

## Patentansprüche

1. Vorrichtung (1) zur Formung einer Dreipunktanhängung einer landwirtschaftlichen Maschine zum Anhängen an landwirtschaftliches Fahrzeug des Typs, umfassend zwei untere Hubarme (2) und einen dritten oberen Anhängepunkt (3), wobei jeder untere Hubarm (2) an einem Verbindungsteil angelenkt ist, das mit dem Gestell des Traktors oder des selbstfahrenden Fahrzeugs angelenkt ist, gekennzeichnet in Kombination dadurch, dass:
- jedes Verbindungsteil ein bewegliches Teil (4) ist, das schwenkend am Rahmen des Traktors oder des selbstfahrenden Fahrzeugs montiert ist, um eine seitliche Verlagerung des distalen Endes (2a) des unteren Hubarms (2) zu erlauben, um das Anhängen und das Abhängen der landwirtschaftlichen Maschine zu erleichtern, wobei die Vorrichtung dann in schwebender Position ist,
- und dass die Vorrichtung ein Blockademittel aufweist, das auf dem Rahmen des Traktors oder des selbstfahrenden Fahrzeugs konfiguriert und ausgebildet ist, um das freie Schwenken jedes beweglichen Teils (4) im Verhältnis zum Rahmen des Traktors oder des selbstfahrenden Fahrzeugs nach dem Anhängen der landwirtschaftlichen Maschine zu blockieren, wobei die Blockade des beweglichen Teils (4) die Blockade der seitlichen Verlagerung des distalen Endes (2a) des unteren Hubarms (2) bewirkt, wobei sich die Vorrichtung dann in blockierter Arbeitsposition befindet,
wobei die Vorrichtung ferner Aktuatoren (9, 14) aufweist, um jeden der unteren Hubarme (2) nach Anhängen der landwirtschaftlichen Maschine seitlich zu verlagern, um das bewegliche Teil, an welches er sich anlenkt, in eine Position zu führen, die seine Blockade erlaubt.

2. Vorrichtung nach Anspruch 1, **dadurch gekennzeichnet, dass** jedes bewegliche Teil (4) eine Y-Konformation aufweist, aufweisend einen unteren Teil, der eine Abdeckung (5) bildet, die am unteren Hubarm (2) angelenkt ist, an welchen das Teil angelenkt ist, und einen oberen Teil, aufweisend eine Halteöse (6), die auf eine Achse greift, die mit dem Rahmen des Traktors oder des selbstfahrenden landwirtschaftlichen Fahrzeugs fest verbunden ist.

3. Vorrichtung nach Anspruch 2, **dadurch gekennzeichnet, dass** jedes bewegliche Y-Teil (4) in blockierter Arbeitsposition eine Haltekonformation (7) aufweist.

4. Vorrichtung nach Anspruch 3, **dadurch gekennzeichnet, dass** die Haltekonformation (7) in blockierter Position ausgebildet ist, um mit einem Verriegelungsorgan (8) zusammenzuwirken, das mit dem Rahmen des Traktors oder des selbstfahrenden landwirtschaftlichen Fahrzeugs fest verbunden ist.

5. Vorrichtung nach Anspruch 4, **dadurch gekennzeichnet, dass** die Haltekonformation (7) in blockierter Position eine Achse aufweist, auf der ein Kugelgelenk (11) montiert ist, und dadurch, dass das Verriegelungsorgan (8) eine Hakenkonformation aufweist, wobei die Haltekonformation (7) und der Haken (8) zueinander so ausgebildet sind, dass der Haken das Kugelgelenk umschließen kann, wenn dieses in der Position ist, die seine Blockade erlaubt.

6. Vorrichtung nach einem der Ansprüche 3 bis 5, **dadurch gekennzeichnet, dass** die Haltekonformation (7) eines beweglichen Y-Teils (4) ein Montageende eines seitlichen Positionierungsaktuators (9) des unteren Hubarms (2) aufweist, an den es sich anlenkt.

7. Vorrichtung nach Anspruch 4 oder Anspruch 5, **dadurch gekennzeichnet, dass** das Verriegelungsorgan (8) ein schwenkendes Organ ist, das von einem Aktuator (10) betätigt wird, der sich auf dem Rahmen des Traktors oder des selbstfahrenden Fahrzeugs abstützt.

8. Vorrichtung nach einem der vorangehenden Ansprüche, **dadurch gekennzeichnet, dass** die Vorrichtung zwei obere Arme (12) aufweist, die zwei entsprechenden Hubzylindern (13) zugeordnet sind.

9. Vorrichtung nach Anspruch 8, **dadurch gekennzeichnet, dass** ein Positionierungsaktuator (14), der einen Ständer bildet, zwischen jedem oberen Arm (12) und jedem unteren Hubarm (2) montiert ist.

## Claims

1. A device (1) forming a three-point hitch for hitching a mounted agricultural machine to an agricultural [tractor or self-propelled vehicle], of the type including two lower lifting arms (2) and a third upper hitching point (3), wherein each lower lifting arm (2) is articulated to an intermediate part connected to the chassis of the tractor or self-propelled vehicle, **characterized in** combination by the facts that:
- each intermediate part is a moving part (4) mounted tilting on the chassis of the tractor or self-propelled vehicle, so as to allow a sideways movement of the distal end (2a) of the lower lifting arm (2) to facilitate the hitching and unhitching of the agricultural machine, the device then being in a floating position; and
- the device includes a blocking means configured and arranged on the chassis of the tractor or self-propelled vehicle to block the free tilting of each moving part (4) relative to the chassis of the tractor or self-propelled vehicle after hitching of the agricultural machine, the blocking of the moving part (4) causing the blocking of the sideways movement of the distal end (2a) of the lower lifting arm (2), the device then being in the blocked work position;
- the device further including actuators (9, 14) for moving each lower lifting arm (2) sideways, after hitching of the agricultural machine, so as to bring the moving part with which it is articulated into the position allowing it to be blocked.

2. The device according to claim 1, **characterized in that** each moving part (4) has a Y-shaped configuration including a lower part forming a yoke (5) articulated to the lower lifting arm (2) with which the part is articulated and an upper part including a maintaining eye (6) engaged on an axle secured to the chassis of the tractor or self-propelled agricultural vehicle.

3. The device according to claim 2, **characterized in that** each Y-shaped moving part (4) has a configuration (7) for maintaining in the blocked work position.

4. The device according to claim 3, **characterized in that** said configuration (7) for maintaining in the blocked position is arranged to cooperate with a locking member (8) secured to the chassis of the agricultural tractor or self-propelled vehicle.

5. The device according to claim 4, **characterized in that** the configuration (7) for maintaining in the blocked position includes an axle on which a ball joint (11) is mounted and **in that** the blocking member (8) has a hook-shaped configuration, the maintaining configuration (7) and the hook (8) being arranged relative to one another such that the hook can imprison the ball joint when the latter is in its position allowing it to be blocked.

6. The device according to any one of claims 3 to 5, **characterized in that** the maintaining configuration (7) of a Y-shaped moving part (4) has an end for mounting a lateral positioning actuator (9) of the lower lifting arm (2) with which it is articulated.

7. The device according to claim 4 or claim 5, **characterized in that** the locking member (8) is a tilting member controlled by an actuator (10) bearing on the chassis of the tractor or self-propelled vehicle.

8. The device according to any one of the preceding claims, **characterized in that** the device includes two upper arms (12) associated with two corresponding lifting jacks (13).

9. The device according to claim 8, **characterized in that** a positioning actuator (14) forming a vertical shore is mounted between each upper arm (12) and each lower lifting arm (2).
